# EUROPEAN PATENT APPLICATION

(11) **EP 4 129 553 A1**
(43) Date of publication of application: **08.02.2023**
(21) Application number: 21778918.9
(22) Date of filing: 24.03.2021
(51) Int. Cl.: B23K 20/12

(54) **LINEAR FRICTION JOINING DEVICE**

(30) Priority: 31.03.2020 JP 2020063332
(71) Applicant: OSAKA UNIVERSITY, Suita-shi Osaka 565-0871 (JP)
(72) Inventor: FUJII, Hidetoshi, Suita-shi, Osaka 565-0871 (JP); MORISADA, Yoshiaki, Suita-shi, Osaka 565-0871 (JP); AOKI, Yasuhiro, Suita-shi, Osaka 565-0871 (JP); KAMAI, Masayoshi, Suita-shi, Osaka 565-0871 (JP)
(74) Representative: Mewburn Ellis LLP
(86) International application number: PCT/JP2021/012371
(87) International publication number: WO 2021/200504

(57) **Abstract**

The present invention provides a linear friction joining device that is compact and inexpensive. In addition, provided is a linear friction joining device that is suitable for joining different materials and manufacturing a large-sized structure. The linear friction joining device according to the present invention for joining one member and another member, is characterized by: being provided with a holding mechanism that causes the one member to abut against the other member so as to form a joined interface, a vibration mechanism that causes the one member and the other member to be relatively excited, and a pressing mechanism that applies joining pressure to the joined interface substantially perpendicularly to the joined interface; and using an electric motor as a driving source of the vibration mechanism.

## Description

### TECHNICAL FIELD

The present invention relates to a linear friction welding device that joins materials to be welded using frictional heat.

### BACKGROUND ART

With the increase in strength of metal materials such as steel and aluminum alloys, the decrease in strength at the welded portion that determine the mechanical properties of the joining structure has become a serious problem. On the other hand, in recent years, attention has been paid to a solid phase joining method in which the maximum temperature reached during joining does not reach the melting point of the material to be welded and the decrease in strength at the welded portion is smaller than that of conventional melt welding, and it is rapidly progressing to put into practical use.

In particular, since the "linear friction welding" in which the material to be welded is reciprocated in contact with the other material to be welded does not require a tool for press-fitting into the material to be welded unlike friction stir welding, it can be easily applied to high melting point and high strength metals such as steel and titanium, and development for a linear friction welding device used for the linear friction welding has been proceeded.

For example, in Patent Document 1 (Japanese Unexamined Patent Publication No. 2017-42772), there is disclosed a linear friction joint device includes a first retention part which retains a first joint material a first actuator which can excite the first retention part; a second retention part which retains a second joint material, a second actuator which can press the second joint material onto the first joint material; and a control part which drives and controls the first actuator and the second actuator, and the control part performs control so as to excite the first joint material in a direction vertical to an axial center of the second joint material with the first actuator while pressing the second joint material onto the first joint material, at the same time, press the second joint material onto the first joint material with a pressing load by a low loading time preset from a joint starting time by means of the second actuator and, after elapse of the low loading time, press the second joint material onto the first joint material with a second pressing load larger than the first pressing load.

In the linear friction welding device described in Patent Document 1, it is said that since the pressing load by the second actuator is reduced by a preset low load time from the start of the linear friction welding, the vibration load at the start of linear frictional joining where the linear friction load is most required can be suppressed, and thus the excellent effects such as miniaturization of the first actuator, miniaturization of the device itself and reduction of the manufacturing can be exhibited.

Further, in Patent Document 2 (Japanese Unexamined Patent Publication No. 2018-75591), there is disclosed a linear friction welding device has: a forge device which presses one workpiece to the other workpiece and a vibration device which vibrates the one workpiece relative to the other workpiece, wherein a structure having: a position sensor which detects a displacement amount of the other workpiece in a pressing direction; and a vibration control device which controls the vibration device so as to switch an amplitude in which the one workpiece is vibrated from a first amplitude to a second amplitude smaller than the first amplitude on the basis of a detection result of the position sensor is adopted.

In the linear friction welding device described in Patent Document 2, the displacement amount of the other member pressed against the one member in the pressing direction is detected, and based on the displacement amount, the amplitude for vibrating the one member is switched from the first amplitude to the second amplitude which is smaller than the first amplitude. Accordingly, by detecting the displacement amount of the other member, that is, the burn-off amount by the position sensor, the vibration amplitude can be switched to a smaller one immediately before the end of the linear friction welding process. As the vibration amplitude becomes smaller, the burn-off amount per unit time (burn-off speed) becomes smaller. Thereby, even if the number of vibrations varies somewhat extent when the vibration is stopped, since the burn-off speed is small, the variation in the burn-off amount is small. Therefore, it is said that the decrease in dimensional accuracy due to the variation in the number of vibrations can be suppressed.

### PRIOR ART REFERENCE

### Patent Reference

Patent Reference 1: JP2017-42772A
Patent Reference 2: JP2018-75591A

### SUMMARY OF THE INVENTION

### Problem to be solved by the invention

The linear friction welding is a joining method with many advantages, and the linear friction welding device has being improved from various points of view, but linear friction welding device is expensive and large due to its complicated mechanism, and although many applications may be imaged, the barrier to technology introduction is high.

In the linear friction welding device disclosed in Patent Document 1, the device itself is downsized and the manufacturing cost is reduced by suppressing the vibration load, and in the linear friction welding device disclosed in Patent Document 2, the deterioration of dimensional accuracy due to the variation in the number of vibrations is suppressed, by switching the vibration amplitude to a smaller one just before the end of the linear friction welding process, but since the complicated hydraulic mechanism with a pressure accumulator is used in the vibration mechanism which is the same as in the conventional linear friction welding device, it is extremely difficult to make the linear friction welding device dramatically inexpensive and downsizing.

In view of the above problems in the prior art, an object of the present invention is to provide a linear friction welding device that is compact and inexpensive. Further, another object of the present invention is to provide a linear friction welding device that is suitable for joining dissimilar materials and manufacturing a large-sized structure.

### MEANS TO SOLVE THE PROBLEMS

In order to achieve the above object, the present inventors have intensive study as to each configuration of the linear friction welding device based on the welding conditions of the linear friction welding that can give a good joint, and as a result, have found that it is extremely important to use a high-performance electric motor for the driving source of the vibration mechanism, and have reached the present invention.

Namely, the present invention provides a linear friction welding device for joining one member and the other member, characterized by: being provided with
a holding mechanism that causes the one member to abut against the other member so as to form an interface to be welded,
a vibration mechanism that causes the one member and the other member to relatively vibrate, and
a pressing mechanism that applies a welding pressure to the interface to be welded substantially perpendicularly to the interface to be welded; and
using an electric motor as a driving source of the vibration mechanism.

Further, the present invention provides a linear friction welding device for joining one member and the other member, characterized by: being provided with
a holding mechanism that causes the one member and the other member to abut via an insert material so as to form the first interface (1) to be welded where the one member abuts to the insert material and the second interface (2) to be welded where the other member abuts to the insert material,
a vibration mechanism that causes the insert material to relatively vibrate between the one member and the other member, and
a pressing mechanism that applies a welding pressure to the first interface (1) to be welded and the second interface (2) to be welded substantially perpendicularly to the interfaces to be welded; and
using an electric motor as a driving source of the vibration mechanism.

Compared to the material to be welded, since the size of the insert material can be easily controlled (downsized), it is possible to manufacture a more suitable linear friction welding device when using an electric motor that is less powerful than the hydraulic mechanism. Here, by using the same material as the material to be welded for the insert material, even a large-sized joint structure can be easily produced. Further, when welding dissimilar materials, an insert material of an appropriate material can be selected in consideration of the joinability with each material to be welded.

In the linear friction welding device of the present invention, the electric motor is used as the drive source of the vibration mechanism. In the conventional linear friction welding device, a complicated hydraulic mechanism with a pressure accumulator called an accumulator is used, and since the mechanism requires a large number of high-pressure tanks and hydraulic pumps, the device is inevitably large and the price will rise. The accumulator is used for the purpose of sliding the material to be welded at high speed by a large force, as a result of the present inventors' linear friction welding tests for various materials to be welded (material, shape, and size), it has been clarified that the welding device can be sufficiently established by driving with an electric motor. Further, maintenance such as regular oil change is indispensable for the hydraulic mechanism, but since such maintenance is not necessary for the electric motor, the use of the electric motor is advantageous in terms of running cost. From the viewpoint of accurately controlling the moving speed, position, and force applied to the material to be welded during the linear friction welding, it is preferable to use an electric servomotor as the electric motor.

Further, by using the electric servomotor as the driving source of the vibration mechanism, the sliding amplitude and frequency can be set to desired values within the range of the capacity of the electric servomotor.

In the linear friction welding device of the present invention, it is preferable that the rotary motion of the electric motor is converted into a linear motion by using a ball screw or a feed screw. By using the ball screw or the feed screw, high accuracy of repeating position can be realized. Further, the maximum pressing force can be generated at all stroke positions, and the linear friction welding can be performed based on the more accurate sliding motion.

Further, in the linear friction welding device of the present invention, it is preferable that the rotary motion of the electric motor is converted into a linear motion by using any one of a crank mechanism, a link mechanism and a knuckle mechanism, or a combination thereof. These mechanisms are simpler than the mechanism using a ball screw, and thus an inexpensive linear friction welding device can be realized.

Further, in the linear friction welding device of the present invention, when an electric servomotor is used as the driving source of the vibration mechanism, it is preferable that the amplitude and/or frequency of the vibration by the vibration mechanism is made variable. By making the amplitude and/or frequency of the vibration variable, it is possible to join various materials to be welded with one linear friction welding device.

Further, in the linear friction welding device of the present invention, it is preferable that the amplitude and/or frequency of the vibration by the vibration mechanism is fixed. When the electric servomotor is not used as the driving source of the vibration mechanism, it is difficult to make the amplitude and/or frequency of the vibration by the vibration mechanism variable, but on the other hand, when the material to be welded is determined, the linear friction welding conditions are basically the same. That is, by using the electric motor having a simple mechanism and fixing the amplitude and/or frequency of the vibration by the vibration mechanism, it is possible to realize the more inexpensive and smaller linear friction welding device for mass production. Here, the wording of "fixing the amplitude and/or frequency" includes a concept having a plurality of values (for example, three patterns of the combination of amplitude and frequency).

Further, in the linear friction welding device of the present invention, it is preferable that the amplitude of the vibration by the vibration mechanism is 0.1 to 5 mm and the frequency is 10 to 100 Hz. By setting the amplitude of the vibration to 0.1 to 5 mm and the frequency to 10 to 100 Hz, the linear frictional joining can be achieved even if the electric motor is used as the driving source of the vibration mechanism. Here, when the amplitude is increased, the upper limit of the frequency is lowered, but if it is within the above numerical range, the linear friction welding can be realized by using an electric motor.

Furthermore, in the linear friction welding device of the present invention, it is preferable that the pressing force by the pressing mechanism is 1.5 × 10⁴ kg or less. Although it is necessary to slide by the vibration mechanism while the pressing force is applied to the material to be welded or the insert material, when the pressing force is set to 1.5 × 10⁴ kg or less, even if the electric motor is used as the driving source of the vibration mechanism, the sliding required for the linear friction welding can be achieved. The force required to slide the material to be welded or the insert material can also be adjusted by the linear frictional welding conditions such as amplitude and/or frequency. Further, when desired to further reduce the force for sliding the material to be welded or the insert material, the material to be welded or the insert material may be softened by using external heating by various conventionally known methods.

### EFFECTS OF THE INVENTION

According to the present invention, it is possible to provide a linear friction welding device that is compact and inexpensive. Further, according to the present invention is also to provide a linear friction welding device that is suitable for welding dissimilar materials and manufacturing a large-sized structure.

### BRIEF DESCRIPTION OF THE DRAWINGS

FIG. 1 is a schematic diagram which shows the situation during the linear friction welding.
FIG. 2 is a schematic diagram which shows the relationship between the state in the process of welding dissimilar materials and the welding temperature when using the center drive type linear friction welding device.
FIG. 3 is one example of the temperature dependence of strength of the material to be welded and the insert material.
FIG. 4 is a schematic diagram which shows the welding process of the dissimilar materials joining by using the linear friction welding device of the center drive method.

### MODE FOR CARRYING OUT THE INVENTION

In the following, by referring the drawings, the typical embodiments of the linear friction welding device of the present invention are explained, but the present invention is not limited thereto. In the following explanation, the same symbol is given to the same or corresponding parts, and there is a case where overlapping explanation is omitted. In addition, since these drawings are presented to explain the concept of the present invention, there are cases where size and ratio of the structural elements are different from the real case.

### (1) Linear friction welding device that vibrates the material to be welded

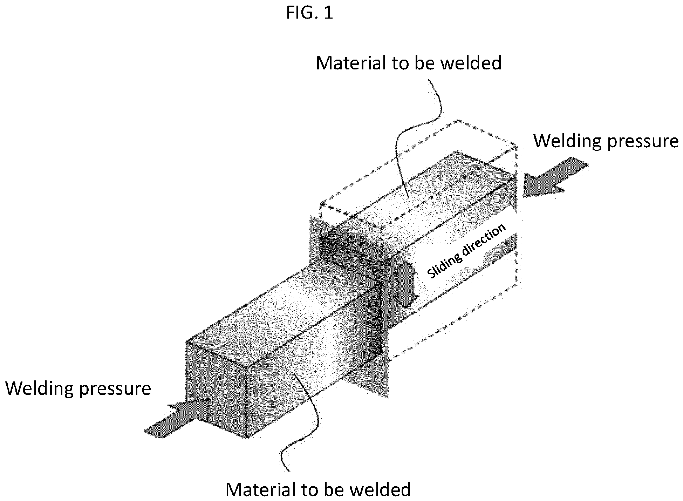

FIG. 1 is a schematic diagram which shows the situation during the linear friction welding. The linear friction welding is a solid phase bonding in which the frictional heat generated when the materials to be welded are rubbed against each other by linear motion is the main heat source. The material softened by the temperature rise is discharged as burrs from the interface to be welded to remove the oxide film formed on the interface to be welded, and the new surfaces are brought into contact with each other to obtain the welded portion.

The linear friction welding device of the present invention is a device for achieving the joining process shown in FIG. 1, and is characterized by provided with a holding mechanism that causes the one member to abut against the other member so as to form an interface to be welded, a vibration mechanism that causes the one member and the other member to relatively vibrate, and a pressing mechanism that applies a welding pressure to the interface to be welded substantially perpendicularly to the interface to be welded; and using an electric motor as a driving source of the vibration mechanism.

The mechanism other than the vibration mechanism where using the power supply motor is not particularly limited as long as the effect of the present invention is not impaired, and a mechanism used in various conventionally known linear friction welding devices can be used. Further, for the control of the vibration mechanism where using the electric motor, for example, a control system of a press machine where using a conventionally known electric motor can be used.

It is preferable to use an electric servomotor as the electric motor. By using the electric servomotor, the sliding amplitude and frequency can be set to desired values within the range of the capacity of the electric servomotor.

In order to convert the rotary motion of the electric motor into the linear motion, it is preferable to use a ball screw or a feed screw. By using the ball screw or the feed screw, high accuracy of repeating position can be realized. Further, the maximum pressing force can be generated at all stroke positions, and the linear friction welding can be performed based on the more accurate sliding motion.

Further, in order to convert the rotary motion of the electric motor into the linear motion, by using any one of a crank mechanism, a link mechanism and a knuckle mechanism, or a combination thereof, an inexpensive linear friction welding device can be realized.

Further, by fixing the amplitude and/or frequency of the vibration by the vibration mechanism and using the electric motor having a simple mechanism, it is possible to realize the more inexpensive and smaller linear friction welding device for mass production.

The amplitude of the vibration by the vibration mechanism is preferably 0.1 to 5 mm, more preferably 0.5 to 3 mm, and most preferably 1 to 2 mm. The frequency of the vibration by the vibration mechanism is preferably 10 to 100 Hz, more preferably 15 to 75 Hz, and most preferably 25 to 50 Hz. When the amplitude is increased, the upper limit of the frequency is lowered, but if it is within the above numerical range, the linear friction welding can be realized by using an electric motor. In particular, by setting the amplitude to 1 to 2 mm and the frequency to 25 to 50 Hz, in addition to being able to fully utilize the characteristics of the electric motor, it is possible to cope with the joining of a wide variety of materials to be welded.

The pressing force by the pressing mechanism is preferably 1.5 × 10⁴ kg or less, more preferably 1.0 × 10⁴ kg or less, and most preferably 0.5 × 10⁴ kg or less. When the pressing force is set within the range, even if the electric motor is used as the driving source of the vibration mechanism, the sliding required for the linear friction welding can be achieved. Here, the force required to slide the material to be welded or the insert material at high speed may be assumed to be about the pressing force to 2/3 of the pressing force.

### (2) Linear friction welding device that vibrates the insert material (center drive method)

The linear friction device of the present invention based on the center drive method is characterized by being provided with a holding mechanism that causes the one member and the other member to abut via an insert material so as to form the first interface (1) to be welded where the one member abuts to the insert material and the second interface (2) to be welded where the other member abuts to the insert material, a vibration mechanism that causes the insert material to relatively vibrate between the one member and the other member, and a pressing mechanism that applies a joining pressure to the first interface (1) to be welded and the second interface (2) to be welded substantially perpendicularly to the interfaces to be welded; and using an electric motor as a driving source of the vibration mechanism.

Even in the case of the center drive method, the mechanism other than the vibration mechanism where using the power supply motor is not particularly limited as long as the effect of the present invention is not impaired, and a mechanism used in various conventionally known linear friction welding devices can be used. Further, for the control of the vibration mechanism where using the electric motor, for example, a control system of a press machine where using a conventionally known electric motor can be used.

In the center drive method, since the insert material is moved at high speed, although a holding mechanism for fixing the insert material is required, the characteristics of the vibration mechanism and the pressing mechanism are basically the same as the aforementioned case of moving the materials to be welded at high speed. On the other hand, since the insert material can be miniaturized relatively easily, it has an advantageous configuration in the linear friction welding device where a powerless electric motor as compared with the hydraulic mechanism is used. Further, when the center drive method is used, it is preferable to provide a pressing mechanism capable of applying different joining pressures substantially perpendicular to the interface (1) to be welded and the interface (2) to be welded. As will be described in detail later, by applying different welding pressures substantially perpendicular to the interface (1) to be welded and the interface (2) to be welded, a good dissimilar material linear friction joint can be obtained.

In the following, a specific example of the linear friction welding device of the present invention by the center drive method will be described by taking the case of controlling the welding temperature for dissimilar material joining as an example. The linear friction welding device of the present invention can realize the following linear friction welding.

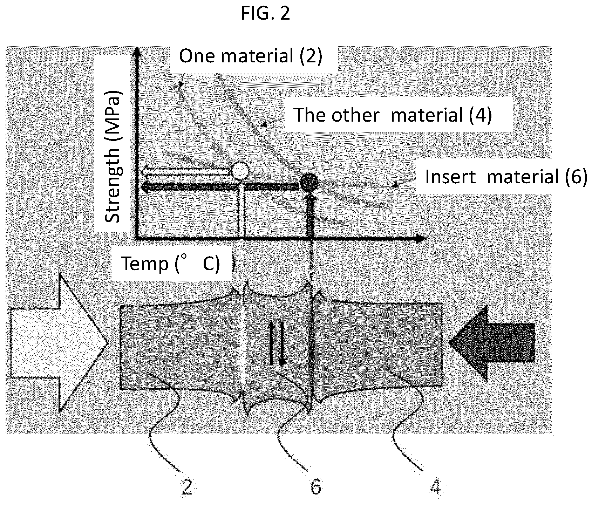

FIG. 2 schematically shows the relationship between the state in the process of welding dissimilar materials and the welding temperature. One member 2 and the other member 4 having a different composition are brought into contact with each other via the insert material 6 to form the interface (1) to be welded where the one member 2 and the insert material 6 are in contact with each other and the interface (2) to be welded where the other member 4 and the insert material 6 are in contact with each other.

In this state, the insert material 6 is repeatedly slid up and down to generate frictional heat at the interface (1) to be welded and the interface (2) to be welded. Here, when controlling the welding temperature at each interface to be welded in the dissimilar material joining, the welding pressure (1) is applied substantially perpendicular to the interface (1) to be welded, and the welding pressure (2) is substantially perpendicular to the interface (2) to be welded, and at that time, the welding pressure (1) and the welding pressure (2) are set to different values. The graph shown on the upper side of FIG. 2 schematically shows the temperature dependence of strength of the one member 2, the other member 4, and the insert material 6. When the one member 2 and the other member 4 have a temperature dependence of strength as shown in FIG. 2, since there is no temperature at which the strengths of the one member 2 and the other member 4 are the same, the one member 2 and the other member 4 cannot be deformed to the same degree. On the other hand, by using the insert material 6 having a temperature dependence of strength as shown in FIG. 2, it is possible to obtain a good joint formed by abutting the new surfaces at the interface (1) to be welded and the interface (2) to be welded. When the one member 2, the other member 4, and the insert material 6 are the same, the welding pressure (1) and the welding pressure (2) are set to the same value.

More specifically, the line showing the temperature dependence of strength of the insert material 6 has intersections both with the line showing the temperature dependence of strength of the one member 2 and the line showing the temperature dependence of strength of the other member 4. Here, at the interface (1) to be welded, the joining pressure (1) corresponding to the intersection of the one member 2 and the insert material 6 may be set, and at the interface (2) to be welded, the welding pressure (2) corresponding to the intersection of the other member 4 and the insert material 6 may be set.

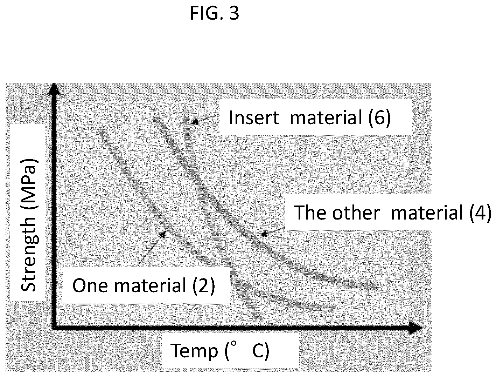

The relationship of the temperature dependent of the strength shown in FIG. 2 is an example, and for example, a combination of the materials to be welded and the insert material 6 having the temperature dependence of strength as shown in FIG. 3 may be used. The insert material 6 may have an "intersection" with the one member 2 and the other member 4, and can be selected from various conventionally known metal materials. Although not limited to this, in general, many metals having a bcc crystal structure have a large temperature dependence of strength, and are candidates for the insert materials when joining metals having an fcc crystal structure to each other. On the other hand, when joining metals having a bcc crystal structure to each other, the metals having an fcc crystal structure are candidates for the insert material.

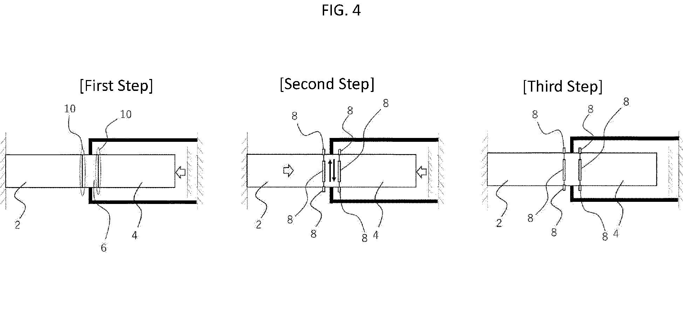

FIG. 4 is a schematic diagram which shows the welding process when the dissimilar materials are welded by using the linear friction welding device of the center drive method. The welding process includes a first step where the one member 2 and the other member 4 are abutted via an insert material 6 so as to form the first interface (1) to be welded where the one member 2 abuts to the insert material 6 and the second interface (2) to be welded where the other member 4 abuts to the insert material 6, a second step where the welding pressure (1) is applied substantially perpendicular to the interface (1) to be welded, the welding pressure (2) is applied substantially perpendicular to the interface (2) to be welded, the welding pressure (1) and the welding pressure (2) are set to different values, the friction heat is generated by the sliding between the one member 2 and the other member 4 and the insert material 6, the temperature of the interface to be welded (1) and the interface to be welded (2) are raised, and discharging the burr 8 from the interfaces to be welded substantially parallel to and substantially perpendicular to the sliding direction, and a third step where the sliding is stopped to form a welded surface. The welding temperature can be accurately controlled by the welding load applied substantially perpendicular to the interface to be welded. In the following, each step will be described in detail.

### (1-1) First step

The first step is a step where the one member 2 and the other member 4 are abutted via an insert material 6 so as to form the first interface (1) to be welded where the one member 2 abuts to the insert material 6 and the second interface (2) to be welded where the other member 4 abuts to the insert material 6. By moving the one member 2 and/or the other member 4 to a position where the formation of the welded portion is desired, the surfaces to be welded are brought into contact with each other via the insert material 6 to form the interface 10 to be welded.

The shape and size of the one member 2 and the other member 4 are not particularly limited as long as the effects of the present invention are not impaired, and may be available as long as the sliding of the insert material 6 can raise the temperature in the vicinity of the interface to be welded 10.

### (1-2) Second step

The second step is a step where the welding pressure (1) is applied substantially perpendicular to the interface (1) to be welded, the welding pressure (2) is applied substantially perpendicular to the interface (2) to be welded, the welding pressure (1) and the welding pressure (2) are set to different values, the friction heat is generated by the sliding between the one member 2 and the other member 4 and the insert material 6, the temperature of the interface to be welded (1) and the interface to be welded (2) are raised, and discharging the burr 8 from the interfaces to be welded substantially parallel to and substantially perpendicular to the sliding direction.

It is preferable that the welding pressure (1) is set to a value equal to or higher than the yield stress and a value equal to or lower than the tensile strength of the insert material 6 and the one member 2 at the temperature (1), and the welding pressure (2) is set to a value equal to or higher than the yield stress and a value equal to or lower than the tensile strength of the insert material 6 and the other member 4 at the temperature (2). When the pressure at the time of solid phase joining is set to be equal to or higher than the yield stress of the material to be welded, the burrs 8 are discharged from the interface 10 to be welded, and when the pressure is increased up to the tensile strength, the discharge of the burrs 8 are accelerated. Similar to the yield stress, since the tensile strength at a specific temperature is substantially constant depending on the material to be welded, the welding temperature corresponding to the set pressure can be realized.

When both members are deformed at the interface 6 to be welded to form a new surface on the surface to be welded of both members, it is possible to obtain a good welded portion by abutting the new surfaces. Here, since the temperature dependence of strength differs between the one member 2 and the other member 4, the deformation behavior and the discharge status of the burr 8 in the vicinity of the interface 10 to be welded are also different, but it is sufficient that a new surface is formed at the interface 10 to be welded.

### (1-3) Third step

The third step is a step where the sliding in the second step is stopped to form a welded surface. A good welded body can be obtained by stopping the sliding after the burrs 8 are discharged from the entire surface of the interface 10 to be welded. The welding pressure (1) and the welding pressure (2) applied to each material to be welded in the second step may be maintained as they are, and the value may be made higher for the purpose of discharging the burr 8 and making the new surface more strongly contacted.

Here, the timing at which the sliding is stopped is not limited after the burr 8 is discharged from the entire surface of the interface 10 to be welded, but it is preferable that, at the interface (1) to be welded and the interface (2) to be welded, the burn-off lengths of the one member 2 and the other member 4 are set so that a new surface is formed in substantially the entire area of these interfaces to be welded, and it is more preferable that, in both the one member 2 and the other member 4, a new surface is formed on the entire area of the interface 10 to be welded. When the new surfaces of the one member 2 and the other member 4 come into contact with the new surface of the insert material 6, a strong joint can be obtained. Here, it is more preferable to stop the increase in the burn-off length at the timing when the new surface is formed in the entire area of the interface 10 to be welded in both members. By terminating the welding process at this timing, it is possible to obtain most efficiently a good joint in which the entire area of the interface 10 to be welded is welded by abutting between the new surfaces. By making the sum of the surface area of the discharged burrs 8 and the increased area in the interface 10 to be welded increased by the deformation of the material to be welded approximately twice the area of the interface 10 to be welded before welding, it is possible to form the new surface all over the interface 10 to be welded.

Although the typical embodiments of the present invention have been described above, the present invention is not limited to these, and various design changes are possible, and all of these design changes are included in the technical scope of the present invention.

### Explanation of symbols

- 2: One member,
- 4: The other member,
- 6: Insert material,
- 8: Burr,
- 10: Interface to be welded.

## Claims

1. A linear friction welding device for joining one member and the other member, **characterized by**: being provided with
a holding mechanism that causes the one member to abut against the other member so as to form an interface to be welded,
a vibration mechanism that causes the one member and the other member to relatively vibrate, and
a pressing mechanism that applies a welding pressure to the interface to be welded substantially perpendicularly to the interface to be welded; and
using an electric motor as a driving source of the vibration mechanism.

2. A linear friction welding device for joining one member and the other member, **characterized by**: being provided with
a holding mechanism that causes the one member and the other member to abut via an insert material so as to form the first interface (1) to be welded where the one member abuts to the insert material and the second interface (2) to be welded where the other member abuts to the insert material,
a vibration mechanism that causes the insert material to relatively vibrate between the one member and the other member, and
a pressing mechanism that applies a welding pressure to the first interface (1) to be welded and the second interface (2) to be welded substantially perpendicularly to the interfaces to be welded; and
using an electric motor as a driving source of the vibration mechanism.

3. The linear friction welding device according to claim 1 or 2, wherein the electric motor is an electric servomotor.

4. The linear friction welding device according to any one of claims 1 to 3, wherein rotary motion of the electric motor is converted into linear motion by using a ball screw or a feed screw.

5. The linear friction welding device according to any one of claims 1 to 3, wherein rotary motion of the electric motor is converted into linear motion by using any one of a crank mechanism, a link mechanism and a knuckle mechanism, or a combination thereof.

6. The linear friction welding device according to any one of claims 1 to 5, wherein the amplitude and/or frequency of the vibration by the vibration mechanism is made variable.

7. The linear friction welding device according to claim 1 or 2, wherein the amplitude and/or frequency of the vibration by the vibration mechanism is fixed.

8. The linear friction welding device according to any one of claims 1 to 8, wherein the amplitude of the vibration by the vibration mechanism is 0.1 to 5 mm and the frequency is 10 to 100 Hz.

9. The linear friction welding device according to any one of claims 1 to 8, wherein the pressing force by the pressing mechanism is 1.5 × 10⁴ kg or less.
